# EUROPÄISCHE PATENTSCHRIFT

(11) **EP 3 752 327 B1**
(45) Veröffentlichungstag und Bekanntmachung des Hinweises auf die Patenterteilung: **14.09.2022**
(21) Anmeldenummer: 19700076.3
(22) Anmeldetag: 03.01.2019
(51) Int. Cl.: B25J 9/16

(54) **KOORDINIERUNGSANLAGE, HANDHABUNGSEINRICHTUNG UND VERFAHREN**
COORDINATION SYSTEM, HANDLING DEVICE AND METHOD
INSTALLATION DE COORDINATION, SYSTÈME DE MANUTENTION ET PROCÉDÉ

(30) Priorität: 15.02.2018 DE 102018202321
(43) Veröffentlichungstag der Anmeldung: 23.12.2020
(73) Patentinhaber: Robert Bosch GmbH, 70442 Stuttgart (DE)
(72) Erfinder: ALATARTSEV, Sergey, 71034 Boeblingen (DE); BEUKE, Felix, 80809 München (DE); JESSEN, Simon, 71254 Ditzingen (DE)
(86) Internationale Anmeldenummer: PCT/EP2019/050072
(87) Internationale Veröffentlichungsnummer: WO 2019/158270

(56) Entgegenhaltungen:
- VOLZ ANDREAS ET AL: "Composition of dynamic roadmaps for dual-arm motion planning", 2017 IEEE INTERNATIONAL CONFERENCE ON ADVANCED INTELLIGENT MECHATRONICS (AIM), IEEE, 3. Juli 2017 (2017-07-03), Seiten 1242-1248, XP033144488, DOI: 10.1109/AIM.2017.8014188 ISBN: 978-1-5090-5998-0 [gefunden am 2017-08-21]
- Chonhyon Park ET AL: "ITOMP: Incremental Trajectory Optimization for Real-Time Replanning in Dynamic Environments", , 1. Januar 2012 (2012-01-01), Seiten 207-215, XP055576235, DOI: 10.1109/TRO.2017.2765335 Gefunden im Internet: URL:https://www.google.com/url?sa=t&rct=j& q=&esrc=s&source=web&cd=3&ved=2ahUKEwigtd_ fhq_hAhXh1uAKHZVEDoIQFjACegQIABAC&url=http s%3A%2F%2Fwww.aaai.org%2Focs%2Findex.php%2 FICAPS%2FICAPS12%2Fpaper%2Fdownload%2F4705 %2F4731&usg=AOvVaw2cBfGuPXRadY3dv75Cwpw0 [gefunden am 2019-04-01]
- CASALINO ANDREA ET AL: "Online planning of optimal trajectories on assigned paths with dynamic constraints for robot manipulators", 2016 IEEE/RSJ INTERNATIONAL CONFERENCE ON INTELLIGENT ROBOTS AND SYSTEMS (IROS), IEEE, 9. Oktober 2016 (2016-10-09), Seiten 979-985, XP033011518, DOI: 10.1109/IROS.2016.7759168 [gefunden am 2016-11-28]
- KRIS HAUSER: "On responsiveness, safety, and completeness in real-time motion planning", AUTONOMOUS ROBOTS, KLUWER ACADEMIC PUBLISHERS, BO, Bd. 32, Nr. 1, 15. September 2011 (2011-09-15), Seiten 35-48, XP019995236, ISSN: 1573-7527, DOI: 10.1007/S10514-011-9254-Z

## Beschreibung

### Stand der Technik

Es wird eine Koordinierungsanlage für eine Handhabungseinrichtung mit einer Mehrzahl an kinematischen Ketten vorgeschlagen. Die kinematischen Ketten sind in einem Arbeitsraum bewegbar angeordnet, wobei mindestens zwei der Arbeitsräume einen Überlapp aufweisen und die kinematischen Ketten zur Durchführung einer auf einem Arbeitsbefehl basierenden Arbeitsbewegung ausgebildet sind. Die Koordinierungsanlage umfasst ein Trajektorienplanungsmodul und ein Steuerungsmodul.

Die Verwendung von Robotern in der Automatisierung von Prozessen und insbesondere in der industriellen Fertigung ist aus dem Stand der Technik bekannt. Insbesondere zeigt sich in den letzten Jahren, dass vermehrt der Einsatz von Mehrarmrobotern und im Speziellen von Zweiarmrobotern zunimmt und zukunftsträchtig zu sein scheint. Im Stand der Technik ist es üblich, die Arme von Mehrarmrobotern separat zu behandeln, als wären diese unabhängige Arme. Die Programmierung für eine Steuerung solcher Roboter ist daher sehr aufwendig.

Die Druckschrift DE 10 2013 014 287 A1 beschreibt ein Verfahren zum Verbinden feinmechanischer Bauteile durch Laserschweißen mit folgenden Schritten: Greifen eines ersten Bauteils aus einem ersten Magazinbereich mit einem an einem ersten Roboterarm vorgesehenen ersten Greifer. Greifen eines zweiten Bauteils aus einem zweiten Magazinbereich mit einem an einem zweiten Roboterarm vorgesehenen zweiten Greifer zum Halten des ersten Bauteils mit dem ersten Greifer und Halten des zweiten Bauteils mit dem zweiten Greifer relativ zueinander und relativ zu einer Lasereinrichtung in einer ersten Montageposition. Aktivieren der Lasereinrichtung und Verbinden des ersten und des zweiten Bauteils miteinander. Ablegen des Zusammenbaus mittels des ersten Greifers in einem Ablagebereich.

In der Schrift "ITOMP: Incremental Trajetory Optimization for Replaning in Dynamic Environenmts" von Park Chonhyon et al. (1. Januar 2012, Seiten 20-215; DOI: 10.1109/TR0.2017.2765335) ist ein Verfahren gezeigt, dass die Überplanung von Trajektorien in Umgebungen mit dynamischen Hindernissen betrifft. Dabei wird zur Trajektorienüberplanung die Geschwindigkeit und die Position der Hindernisse bestimmt.

Die Publikation "Online planning of optimal trajectories on assigned path with dynamic constraints for robot manipulators" von Andrea Casalino et al. beschreibt das zeitoptimierte Planen einer Trajektorie eines Roboters mit einer kinematischen Kette.

Als nächstkommender Stand der Technik offenbart die Schrift "Composition of Dynamic Roadmaps for Dual-Arm Motion Planning" von Andreas Volz et al. (2017 IEEE International Conference on Advanced Intelligent Mechatronics (AIM), 3. Juli 2017, Seiten 1242-1248, DOI 10.1109/AIM.2017.8014188) Geometrie basierte Methoden zur Bestimmung von kollisionsfreien Trajektorien, wobei die Roboterarmsynchronisation in den geometrischen Pfaden erfolgt.

### Offenbarung der Erfindung

Es wird eine Koordinierungsanlage für eine Handhabungseinrichtung mit den Merkmalen des Anspruchs 1 vorgeschlagen. Ferner wird eine Handhabungseinrichtung mit den Merkmalen des Anspruchs 12 vorgeschlagen sowie ein Verfahren zur Koordinierung der Handhabungseinrichtung mit den Merkmalen des Anspruchs 13. Weitere Vorteile und Wirkungen ergeben sich aus den Unteransprüchen und der nachfolgenden Beschreibung.

Es wird eine Koordinierungsanlage für eine Handhabungseinrichtung vorgeschlagen. Insbesondere ist die Koordinierungsanlage ausgebildet, die Handhabungseinrichtung anzusteuern, beispielsweise deren Arme und/oder kinematischen Ketten zu koordinieren, die Handhabungseinrichtung zu bedienen und/oder einzustellen. Die Koordinierungsanlage kann insbesondere softwaretechnisch ausgebildet sein. Besonders bevorzugt ist die Koordinierungsanlage ausgebildet, Planungs- und Durchführungsschritte in einer nach dem Messen-Planen-Durchführungsmodell aufgebauten Handhabungseinrichtung durchzuführen.

Die Handhabungseinrichtung ist beispielsweise als ein Roboter ausgebildet. Der Roboter kann ein stationärer oder ein mobiler Roboter sein. Die Handhabungseinrichtung ist vorzugsweise als eine Einrichtung einer industriellen Automatisierungstechnik ausgebildet. Alternativ und/oder ergänzend kann die Handhabungseinrichtung als ein Serviceroboter ausgebildet sein, beispielsweise als ein Staubsaugerroboter. Die Handhabungseinrichtung ist beispielsweise als ein Fertigungsarbeitsplatz oder als ein Montageplatz ausgebildet und/oder ist Teil eines Fertigungsplatzes oder Montageplatzes. Die Handhabungseinrichtung ist zur Durchführung beispielsweise eines Montageschrittes oder eines Fertigungsschrittes ausgebildet. Die Handhabungseinrichtung ist vorzugsweise als ein Mehrarmroboter oder im Speziellen als ein Zweiarmroboter ausgebildet. Beispielsweise ist der Roboter als ein Knickarmroboter ausgebildet. Im Speziellen ist der Roboter ein Mehrachsenroboter. Ferner kann die Handhabungseinrichtung auch eine Mehrzahl an Robotern aufweisen.

Die Handhabungseinrichtung weist eine Mehrzahl an kinematischen Ketten auf. Vorzugsweise weist die Handhabungseinrichtung zwei kinematische Ketten auf. Die kinematischen Ketten sind insbesondere als Roboterarme ausgebildet, im Folgenden kurz auch Arm genannt. Vorzugsweise ist am Ende der kinematischen Kette ein Endeffektor angeordnet. Jede der kinematischen Ketten ist in einem Arbeitsraum bewegbar. Insbesondere ist der Endeffektor im Arbeitsraum bewegbar. Der Arbeitsraum ist beispielsweise ein sechsdimensionaler Raum. Vorzugsweise ist jeder Punkt des Arbeitsraums durch die kinematische Kette und/oder durch den Endeffektor erreichbar. Mindestens zwei der Arbeitsräume und/oder exakt zwei Arbeitsräume weisen einen Überlapp auf. Der Überlapp kann einen und/oder beide Arbeitsräume vollständig umfassen. Alternativ weist der Überlapp zwischen den zwei Arbeitsräumen jeweils nur einen Teil der einzelnen Arbeitsräume auf.

Die kinematischen Ketten sind zur Durchführung einer Arbeitsbewegung ausgebildet. Insbesondere sind die kinematischen Ketten zur Durchführung einer auf einem Arbeitsbefehl basierenden Arbeitsbewegung ausgebildet. Der Arbeitsbefehl ist beispielsweise: Nimm einen Gegenstand von dieser Position auf. Vorzugsweise ist der Arbeitsbefehl jeweils für eine kinematische Kette ausgebildet und/oder einer kinematischen Kette zugeordnet. Die Arbeitsbewegung dient beispielsweise der Durchführung des Produktions- und/oder Montageschrittes. Die Arbeitsbewegung ist beispielsweise das Anfahren eines Punktes und/oder einer Koordinate mit dem Endeffektor.

Die Koordinierungsanlage weist ein Trajektorienplanungsmodul und ein Steuerungsmodul auf. Trajektorienplanungsmodul und/oder Steuerungsmodul können beispielsweise als eine Rechnereinheit, als ein Prozessor oder ein Mikrochip ausgebildet sein. Beispielsweise sind Trajektorienplanungsmodul und Steuerungsmodul als eine gemeinsame Rechnereinheit ausgebildet.

Das Steuerungsmodul ist ausgebildet, die kinematischen Ketten zur Durchführung der Arbeitsbewegung basierend auf Trajektoriendaten anzusteuern. Beispielsweise sind die Trajektoriendaten eine Trajektorienfunktion, welche einem Zeitpunkt einem Ort des Endeffektors im Raum zuordnet und/oder welche einen Zeitpunkt eine Winkelstellung von Gelenken der Handhabungseinrichtung vorschreibt. Alternativ sind die Trajektoriendaten als Datentupel ausgebildet, welche einem Zeitpunkt weitere Daten zuordnet, wobei diese zugeordneten Daten einen Zustand der kinematischen Kette beschreiben können. Insbesondere sind für jede Arbeitsbewegung separate Trajektoriendaten nötig.

Das Trajektorienplanungsmodul ist ausgebildet, die Trajektoriendaten zur Durchführung der Arbeitsbewegung zu bestimmen. Das Trajektorenplanungsmodul umfasst einen Trajektorienkoordinador oder ist als ein Trajektorienkoordinator ausgebildet. Das Trajektorienplanungsmodul bestimmt beispielsweise, welche Trajektorie zur Durchführung der Arbeitsbewegung und/oder Arbeitsbefehls möglich ist. Insbesondere bestimmt das Trajektorienplanungsmodul eine kollisionsfreie Trajektorie. Das Trajektorienplanungsmodul berücksichtigt beispielsweise bei der Trajektorienplanung eine auf einen weiteren Arbeitsbefehl basierende Arbeitsbewegung und/oder Arbeitsbefehle für andere kinematische Ketten. Das Trajektorienplanungsmodul ist ausgebildet, die Trajektoriendaten dem Steuerungsmodul bereitzustellen. Beispielsweise sind dazu Trajektorienplanungsmodul und Steuerungsmodul datentechnisch miteinander verbunden. Ferner kann es vorgesehen sein, dass zwischen Trajektorienplanungsmodul und Steuerungsmodul ein Trajektorienpuffermodul angeordnet ist, welches die Trajektoriendaten des Trajektorienplanungsmoduls zwischenspeichert, bevor es die Trajektorien vollständig oder teilweise an das Steuerungsmodul weitergibt.

Das Trajektorienplanungsmodul ist ausgebildet, bei Vorliegen eines weiteren Arbeitsbefehles während der Durchführung der Arbeitsbewegung die Trajektoriendaten in umgeplante Trajektoriendaten umzuplanen und dem Steuerungsmodul weiterzugeben. Der weitere Arbeitsbefehl liegt insbesondere erst zu einem späteren Zeitpunkt vor als der ursprüngliche Arbeitsbefehl. Als ursprünglicher Arbeitsbefehl wird insbesondere ein Arbeitsbefehl verstanden der keine umgeplante Trajektorendaten aufweist. Das Steuerungsmodul ist dann vorzugsweise ausgebildet, die umgeplanten Trajektoriendaten als neue Trajektoriendaten zu verwenden. Das Trajektorienplanungsmodul bricht somit die ursprüngliche Arbeitsbewegung nicht ab, wenn ein weiterer Arbeitsbefehl vorliegt und/oder eintritt, sondern führt den ursprünglichen Arbeitsbefehl weiter aus und plant währenddessen eine umgeplante Trajektorie mit umgeplanten Trajektoriendaten, wobei nach dem Umplanen die umgeplanten Trajektoriendaten dem Steuerungsmodul bereitgestellt werden und insbesondere die Arbeitsbewegungen mit den umgeplanten Trajektorien durchgeführt werden. Es wird somit insbesondere simultan zur Durchführung der Arbeitsbewegung für den weiteren Arbeitsbefehl eine Trajektorie geplant und insbesondere die ursprüngliche Trajektorie mit den ursprünglichen Trajektoriendaten so umgeplant, dass der ursprüngliche Arbeitsbefehl und der neue Arbeitsbefehl gleichzeitig ausgeführt werden können.

Das Umplanen ist ein Reparametrisieren der Trajektoriendaten in die umgeplanten Trajektoriendaten. Die umgeplanten Trajktoriendaten können insbesondere auch als koordinierte Trajektoriendaten aufgefasst werden. Das Umplanen erfolgt im Speziellen durch den Trajektorienkoordinator. Das Umplanen plant die ursprünglichen Trajktorien so um und/oder reparametrisiert diese so, dass die Bewegungen und/oder umgeplanten Trajektorien gemeinsam kollisionsfrei ausführbar sind. Die umgeplante Trajektorie ist die ursprüngliche Trajektorie die jedoch mit unterschiedlicher Geschwindigkeit ausgeführt wird, wobei Teile der Trajektorie beschleunigt oder verlangsamt ausgeführt werden. Beispielsweise wird bei einer Arbeitsbewegung mit zwei Roboterarmen die Trajektorie des einen Arms langsamer ausgeführt, oder der Arm teilweise abgebremst, während der andere Arm seine Bewegung weiter ausführt, so dass keine Kollision der Arme stattfindet. Das Umplanen und/oder Reparametrisieren erfoglt insbesondere in Real-time.

Dieser Erfindung liegt die Überlegung zugrunde, eine leistungsstärkere Koordinierungsanlage bereitzustellen, insbesondere, um die Handhabungseinrichtung schneller koordinieren und/oder steuern zu können. Die vorgeschlagene Koordinierungsanlage ist somit sowohl reaktiv als auch responsiv.

Die Koordinierung der Handhabungseinrichtung erfolgt mittels der Koordinierungsanlage dynamisch.

Eine Ausgestaltung der Erfindung sieht vor, dass das Trajektorienplanungsmodul ausgebildet ist, die Trajektoriendaten erst ab einem Pufferzeitpunkt in die umgeplanten Trajektoriendaten umzuplanen. Der Pufferzeitpunkt ist ein Zeitpunkt in der Zukunft von einem Ereigniszeitpunkt aus gerechnet, wobei der Pufferzeitpunkt um ein Pufferzeitintervall nach dem Ereigniszeitpunkt liegt. Der Ereigniszeitpunkt ist insbesondere ein Zeitpunkt, an dem der weitere Arbeitsbefehl vorliegt und/oder bereitgestellt wird. Insbesondere kann der Ereigniszeitpunkt auch der aktuelle Zeitpunkt bei der Durchführung der Arbeitsbewegung sein. Im Speziellen kann der Ereigniszeitpunkt der aktuelle Zeitpunkt sein. Das Pufferzeitintervall kann ein festes Zeitintervall sein oder ein flexibles Zeitintervall. Vorzugsweise ist das Pufferzeitintervall im Millisekundenbereich und/oder kleiner als eine Sekunde. Dieser Ausgestaltung liegt die Überlegung zugrunde, dass das Steuerungsmodul bis zum Pufferzeitpunkt die Handhabungseinrichtung mit den nicht umgeplanten Trajektoriendaten ansteuert, die Trajektoriendaten erst ab dem Pufferzeitpunkt zu den umgeplanten Trajektoriendaten umplant und ab dem Pufferzeitpunkt die Handhabungseinrichtung mit den umgeplanten Trajektoriendaten ansteuert.

Optional ist das Steuerungsmodul ausgebildet, mindestens bis zu einem Garantiezeitpunkt die kinematischen Ketten zur Durchführung der Arbeitsbewegung basierend auf den ursprünglichen Trajektoriendaten anzusteuern. Die ursprünglichen Trajektoriendaten sind insbesondere nichtumgeplante Trajektoriendaten. Der Garantiezeitpunkt ist ein Zeitpunkt nach dem Ereigniszeitpunkt, wobei der Garantiezeitpunkt um ein Garantieintervall nach dem Ereigniszeitpunkt liegt. Insbesondere sind Trajektoriendaten von dem Trajektorienplanungsmodul, die vor dem Garantiezeitpunkt liegen, nicht umplanbar. Trajektoriendaten vor dem Garantiezeitpunkt werden somit von den kinematischen Ketten unveränderbar ausgeführt.

Besonders bevorzugt ist es, dass der Garantiezeitpunkt gleich dem Pufferzeitpunkt ist. Alternativ ist der Garantiezeitpunkt ein früherer Zeitpunkt als der Pufferzeitpunkt.

Das Trajektorienplanungsmodul ist ausgebildet, als vorläufige Trajektoriendaten für jede der kinematischen Ketten eine Minimalzeittrajektorie zu bestimmen, wobei die Koordinierungsanlage ein Koordinierungsmodul aufweist, wobei das Koordinierungsmodul ausgebildet ist, die auf der Minimalzeittrajektorie basierenden vorläufigen Trajektoriendaten in die Trajektoriendaten zu reparametrisieren, sodass die Gesamtbewegung kollisionsfrei ist. Vorzugsweise wird als eine Minimalzeittrajektorie eine Trajektorie verstanden, welche zur Ausführung der Arbeitsbewegung eine geringste Zeit benötigt. Im Speziellen ist eine Minimalzeittrajektorie die Trajektorie für die Arbeitsbewegung, die für einen gegebenen Pfad unter Berücksichtigung von dynamischen Beschränkungen der Handhabungseinrichtung und/oder der kinematischen Kette eine geringste Ausführungsdauer für die Arbeitsbewegung ergibt.

Optional ist das Trajektorienplanungsmodul ausgebildet, die Minimalzeittrajektorie basierend auf einer endlichen Maximalbeschleunigung und/oder einer endlichen Maximalgeschwindigkeit der kinematischen Kette und/oder eines Gelenkes der kinematischen Kette zu bestimmen. Insbesondere werden als Beschränkungen eine endliche Verstellgeschwindigkeit und/oder eine endliche Verstellbeschleunigung der kinematischen Kette verstanden.

Insbesondere weist die Koordinierungsanlage ein Ausblendemodul auf. Das Ausblendemodul kann ein Software- oder ein Hardwaremodul sein. Insbesondere ist das Ausblendemodul Teil des Steuerungsmoduls und/oder Teil des Trajektorienplanungsmoduls. Das Ausblendemodul ist ausgebildet, für das Steuerungsmodul Trajektoriendaten auszublenden, die gerade in der Umplanung sind und/oder einen späteren Zeitpunkt aufweisen als ein Maximalvorauslesezeitpunkt. Der Maximalvorauslesezeitpunkt liegt um ein Vorauslesezeitintervall vor dem aktuellen Zeitpunkt. Der Maximalvorauslesezeitpunkt ist damit insbesondere ein dynamischer Zeitpunkt, der mit ablaufender Zeit sich ebenfalls verschiebt. Damit werden dem Steuerungsmodul durch das Ausblendemodul die Trajektoriendaten immer nur stückchenweise weitergegeben, sodass das Steuerungsmodul jeweils nur Trajektoriendaten sieht, die das Vorauslesezeitintervall in der Zukunft liegen.

Besonders bevorzugt ist es, dass die Koordinierungsanlage ein Schätzmodul aufweist. Das Schätzmodul ist softwaretechnisch oder hardwaretechnisch ausgebildet, beispielsweise ist das Schätzmodul eine Rechnereinheit. Das Schätzmodul ist ausgebildet, ein Planungszeitintervall zu schätzen. Das Planungszeitintervall ist insbesondere die Zeitdauer, die zur Reparametrisierung und/oder Umplanung der Trajektoriendaten erforderlich ist. Insbesondere ist das Planungszeitintervall ein festes Zeitintervall, beispielsweise einige Mikrosekunden oder Sekunden, alternativ ist das Planungszeitintervall ein dynamisches Zeitintervall, welches von der Komplexität der Reparametrisierung und/oder Umplanung der Trajektoriendaten abhängt.

Optional ist der Pufferzeitpunkt ein Zeitpunkt, der nach dem Ereigniszeitpunkt liegt, wobei der Pufferzeitpunkt das Planungszeitintervall nach dem Ereigniszeitpunkt liegt. Ferner kann es vorgesehen sein, dass der Maximalvorauslesezeitpunkt definiert ist als der Zeitpunkt, der um das Planungszeitintervall vom Ereigniszeitpunkt aus in der Zukunft liegt.

Besonders bevorzugt ist es, dass der Pufferzeitpunkt einem Zeitpunkt entspricht, der sich errechnen lässt als Ereigniszeitpunkt plus Pufferzeitintervall plus Planungszeitintervall. Dieser Ausgestaltung liegt die Überlegung zugrunde, eine Koordinierungsanlage bereitzustellen, für die sichergestellt ist, dass bis zum Pufferzeitpunkt die Handhabungseinrichtung neu ansteuerbar ist mit den umgeplanten Trajektoriendaten.

Insbesondere ist der Pufferzeitpunkt ein Zeitpunkt kleiner oder gleich, beziehungsweise früher oder gleich, dem Maximalvorauslesezeitpunkt. Dieser Ausgestaltung liegt die Überlegung zugrunde, dass das Steuerungsmodul so viel von der Trajektorie sieht, dass es neben der Pufferzeit beispielsweise auch die Planungszeit berücksichtigen kann.

Die Koordinierungsanlage ist insbesondere eine reaktive und/oder responsive Koordinierungsanlage für einen Mehrarm-, insbesondere Zweiarmroboter. Die Armkoordinierung der Roboterarme mit der Koordinierungsanlage ist insbesondere das Auffinden einer kollisionsfreien Trajektorie für die Roboterarme in einem gemeinsamen Arbeitsraum. Responsiv meint in diesem Zusammenhang insbesondere, dass das Planen einer neuen Arbeitsbewegung weniger Zeit in Anspruch nimmt als die physikalische Ausführung der Arbeitsbewegung. Reaktiv bedeutet in diesem Zusammenhang vorzugsweise, dass der ursprüngliche Plan und/oder die ursprüngliche Arbeitsbewegung verfeinert werden kann, wenn ein weiterer Arbeitsbefehl vorliegt. Die Koordinierungsanlage ermöglicht insbesondere, dass die Handhabungseinrichtung bei Vorliegen eines weiteren Arbeitsbefehls nicht anhalten muss, sondern weiterarbeiten kann, sodass die Wertschöpfung einer Handhabungseinrichtung gesteigert werden kann.

Die Koordinierungsanlage ist insbesondere für Handhabungseinrichtungen mit Multi-DOF (degree of freedom) und/oder für Low-DOF ausgebildet. Multi-DOF-Systeme sind beispielsweise Industrieroboter, wobei beispielsweise Low-DOF-Systeme mobile Roboter sind. Die Koordinierungsanlage ist insbesondere für Handhabungseinrichtungen mit veränderbaren Geschwindigkeitsprofilen. Die Koordinierungsanlage und/oder das Trajektorienplanungsmodul ist vorzugsweise ausgebildet, zu entscheiden, welche kinematische Kette und/oder welche Arbeitsbewegung Priorität vor einer anderen hat.

Einen weiteren Gegenstand der Erfindung bildet eine Handhabungseinrichtung. Die Handhabungseinrichtung weist die Koordinierungsanlage auf. Beispielsweise ist die Koordinierungsanlage in die Handhabungseinrichtung integriert. Die Koordinierungsanlage ist ausgebildet, die Handhabungseinrichtung, insbesondere die kinematischen Ketten der Handhabungseinrichtung, anzusteuern.

Besonders bevorzugt ist es, dass die kinematischen Ketten jeweils als ein Roboterarm ausgebildet sind. Die Roboterarme sind beispielsweise Knickarmroboterarme. Alternativ können die Roboterarme als Linearachsen ausgebildet sein. Die Roboterarme weisen beispielsweise Gelenke auf, wobei die Gelenke verstellbar sind und beispielsweise deren Winkel zuordenbar, wobei beispielsweise die Trajektoriendaten die Winkeldaten und/oder Winkelstellungen der jeweiligen Gelenke angibt.

Die Handhabungseinrichtung ist vorzugsweise als ein Roboter ausgebildet. Beispielsweise ist der Roboter ein Zweiarmroboter, ein Dreiarmroboter oder ein Mehrarmroboter.

Einen weiteren Gegenstand der Erfindung bildet ein Verfahren zum Koordinieren einer Handhabungseinrichtung nach Anpruch 13 Die umgeplanten Trajektoriendaten erlauben es, den weiteren Arbeitsbefehl und/oder alten Arbeitsbefehl auszuführen. Die umgeplanten Trajektoriendaten erlauben es ferner, dass die Arbeitsbewegungen kollisionsfrei durchführbar sind.

Einen weiteren Gegenstand der Erfindung bildet ein Computerprogramm, welches eingerichtet ist, alle Schritte des vorstehend beschriebenen Verfahrens auszuführen und ein maschinenlesbares, insbesondere nichtflüchtiges maschinenlesbares, Speichermedium, auf dem das beschriebene Computerprogramm gespeichert ist.

Weitere Merkmale, Vorteile und Wirkungen der Erfindung ergeben sich aus der nachfolgenden Beschreibung bevorzugter Ausführungsbeispiele sowie der beigefügten Figuren. Dabei zeigen:
Figur 1 eine Handhabungseinrichtung als ein Ausführungsbeispiel;
Figur 2 die Handhabungseinrichtung in einem Sense-Plan-Act-Schema;
Figuren 3a-3i den Koordinierungsbaluf..

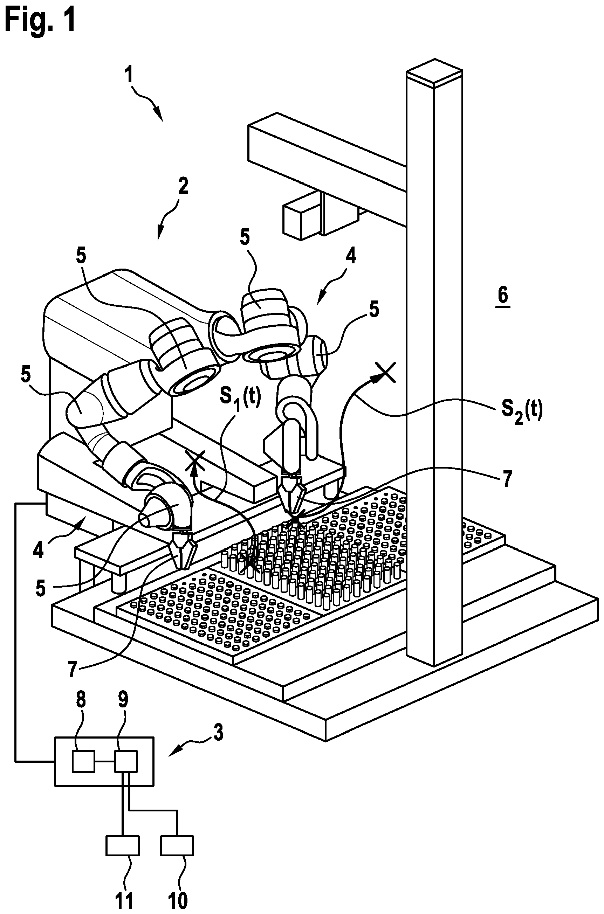

Figur 1 zeigt eine Handhabungseinrichtung 1. Die Handhabungseinrichtung 1 weist einen Roboter 2 auf oder ist als ein Roboter 2 ausgebildet. Die Handhabungseinrichtung 1 weist ferner eine Koordinierungsanlage 3 auf.

Der Roboter 2 ist als ein Mehrarmroboter, in diesem Beispiel als ein Zweiarmroboter, ausgebildet. Der Roboter 2 und/oder die Handhabungseinrichtung 1 ist Teil eines Montageplatzes einer Produktionsanlage. Der Roboter 2 ist zur Bearbeitung und/oder Montage eines Objekts ausgebildet, wobei das Objekt beispielsweise ein Werkstück ist. Der Roboter 2 kann das Objekt greifen, transportieren und/oder bearbeiten.

Der Roboter 2 weist zwei kinematische Ketten 4 auf, wobei die kinematischen Ketten 4 von den Roboterarmen gebildet sind und/oder die Roboterarme bilden. Die kinematischen Ketten 4 weisen jeweils eine Mehrzahl an Gelenken 5 auf, wobei die Gelenke 5 ausgebildet sind, eine Winkelverstellung zu ermöglichen, sodass mittels der Gelenke 5 die kinematischen Ketten jeweils im Arbeitsraum 6 bewegbar sind. Die Gelenke 5 sind mit einer Verstellgeschwindigkeit und einer Verstellbeschleunigung bewegbar, wobei die Gelenke 5 eine Maximalgeschwindigkeit und eine Maximalbeschleunigung aufweisen, die mögliche Trajektorien und/oder Durchführungen der Trajektorie beschränken. An den freien Enden der kinematischen Ketten 4 sind jeweils ein Endeffektor 7 angeordnet. Die Endeffektoren 7 sind als Greifer ausgebildet und können beispielsweise das Werkstück greifen und/oder manipulieren.

Die kinematischen Ketten 4 sind im Arbeitsraum 6 bewegbar. Der Endeffektor 7 von einem Startpunkt entlang eines Bewegungspfades s(t) zu einem Endpunkt bewegbar. Die Bewegungspfade können für die beiden kinematischen Ketten 4 unterschiedlich sein, beispielsweise ist die Handhabungseinrichtung 1 ausgebildet, einen Endeffektor entlang des Bewegungspfades s₁(t) zu bewegen und den anderen Endeffektor entlang des Bewegungspfades s₂(t) zu bewegen.

Die Handhabungseinrichtung 1 weist eine Koordinierungsanlage 3 auf, wobei die Koordinierungsanlage 3 ein Steuerungsmodul 8 und ein Trajektorienplanungsmodul 9 aufweist. Das Steuerungsmodul 8 ist ausgebildet, den Roboter 2 mittels Trajektoriendaten zur Durchführung einer Arbeitsbewegung anzusteuern. Die Trajektoriendaten sind beispielsweise Trajektorienfunktionen, wobei die Trajektorienfunktionen vorzugsweise vektorwertige Funktionen sind, die jeweils so viele Einträge haben, wie die kinematische Kette 4 Gelenke 5 aufweist. Beispielsweise weist eine kinematische Kette 4 drei Gelenke 5 auf, wobei die Trajektorienfunktion dann einen Dreiervektor bildet mit beispielsweise drei Winkeleinträgen, wobei die Winkeleinträge die Winkelstellung des Gelenkes 5 beschreiben. Ferner ist es möglich, dass die Trajektorienfunktionen die Verstellgeschwindigkeiten und Verstellbeschleunigungen der Gelenke 5 umfassen und deren Begrenzung berücksichtigen.

Die Handhabungseinrichtung 1 kann eine Mehrzahl an Sensoren 10 aufweisen, wobei die Sensoren 10 beispielsweise den aktuellen Status und/oder den aktuellen Arbeitsprozess des Roboters 2 überwachen. Beispielsweise sind die Sensoren 10 Videokameras oder Bewegungstracker der Endeffektoren 7. Die Sensoren 10 können Sensordaten der Koordinierungsanlage 3 und insbesondere dem Trajektorienplanungsmodul 9 bereitstellen. Die Handhabungseinrichtung 1 und/oder die Koordinierungsanlage 3 weist eine Eingabevorrichtung 11 auf. Mittels der Eingabevorrichtung 11 kann beispielsweise ein Benutzer oder ein Einsteller der Handhabungseinrichtung 1 einen Arbeitsbefehl eingeben. Der Arbeitsbefehl lautet beispielsweise: Greife Objekt A und transportiere es zu dem Punkt B. Das Trajektorienplanungsmodul 9 weist einen Trajektorienkoordinator auf und/oder bildet einen solchen, wobei das Trajektorienplanungsmodul 9 ausgebildet ist, basierend auf dem Arbeitsbefehl eine Trajektorie zu bestimmen, wobei die Trajektorie insbesondere die Maximalgeschwindigkeit und Maximalbeschleunigungen aufweist. Ferner ist das Trajektorienplanungsmodul ausgebildet, die Bewegungen aller kinematischen Ketten 4 des Roboters 2 zu berücksichtigen, sodass der Arbeitsbefehl kollisionsfrei ausführbar ist, wobei die Bewegung kollisonsfrei insbesondere in Bezug auf die statische Umgebung ist. Insbesondere berücksichtigt das Trajektorienplanungsmodul 9 die Sensordaten der Sensoren 10. Das Trajektorienplanungsmodul 9 ist ausgebildet, die Trajektoriendaten, welche die durchzuführende Trajektorie beschreiben, im Steuerungsmodul 8 bereitzustellen.

Wird ein neuer Arbeitsbefehl oder ein weiterer Arbeitsbefehl eingegeben, beispielsweise mit der Eingabevorrichtung 11, so ist das Trajektorienplanungsmodul 9 ausgebildet, die ursprüngliche und/oder vorher vorliegende Trajektorie mindestens zeitweise weiter auszuführen, wobei das Steuerungsmodul 8 den Roboter 2 weiterhin mit den alten Trajektoriendaten ansteuert, und während der weiteren Ansteuerung mit den alten Trajektoriendaten umgeplante Trajektoriendaten zu bestimmen, welche den weiteren Arbeitsbefehl berücksichtigen. Erst nach Umplanung werden die umgeplanten Trajektoriendaten dem Steuerungsmodul 8 bereitgestellt und der Roboter 2 mit den neuen umgeplanten Trajektoriendaten angesteuert. Es wird also bei der Planung neuer umgeplanter Trajektoriendaten der Roboter 2 weiterhin mit den ursprünglichen Trajektoriendaten betrieben, sodass der Betrieb der Handhabungseinrichtung 1 möglichst effektiv geschieht.

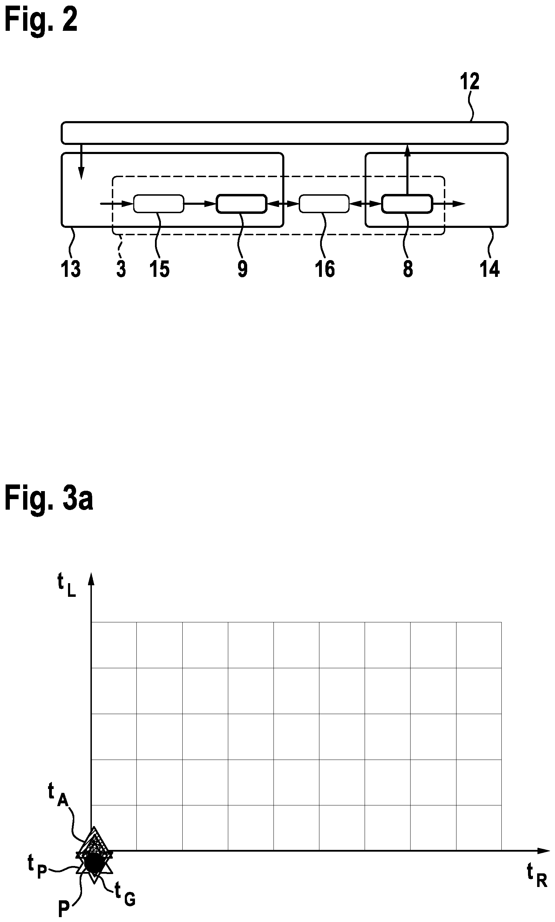

Figur 2 zeigt schematisch den Aufbau einer Handhabungseinrichtung 1 gemäß dem Sense-Plan-Act-Schema. Das Sense-Plan-Act-Schema entspricht insbesondere dem Messen-Planen-Durchführen-Modell. Dieses Schema sieht vor, dass die Handhabungseinrichtung 1 eine Sensorebene 12, eine Planungsebene 13 und eine Durchführungsebene 14 aufweist. Zwischen der Sensorebene 12, der Planungsebene 13 und/oder der Durchführungsebene 14 erfolgt jeweils ein Datenaustausch. Insbesondere ist der Datenaustausch zyklisch und/oder regelmäßig. Die Sensorebene 12 sieht vor, dass mittels der Sensoren 10 Sensordaten ermittelt werden. Die Sensordaten werden der Planungsebene 13 bereitgestellt. Insbesondere können die Sensordaten in einem ersten Puffer 15 zwischengespeichert werden. Diese Sensordaten werden dem Trajektorienplanungsmodul 9 bereitgestellt. Das Trajektorienplanungsmodul 9 bestimmt die Trajektorie zur Durchführung der Arbeitsbewegung. Das Trajektorienplanugnsmodul 9 fungiert dabei insbesondere als Trajektorienkoordiniator, wobei der Trajektorienkoordinator ausgebildet ist, die ursprünglichen Trajktoriendaten umzuplanen und/oder zu reparametrisieren, sodass die Arbeitsbewegungen teilweise beschleunigt oder verlangsamt ausgeführt werden können. Die dabei ermittelten Trajektoriendaten können in einem Koordinationspuffer 16 zwischengespeichert werden. Der Koordinationspuffer 16 wird im Speziellen vom Trajektorienpuffermodul gebildet. Die Trajektoriendaten können dann weitergeleitet werden an das Steuerungsmodul 8. Das Steuerungsmodul 8 ist wiederum Teil der Durchführungsebene 14. Das Steuerungsmodul 8 ist ausgebildet, basierend auf den Trajektoriendaten den Roboter anzusteuern und so die Arbeitsbewegung durchzuführen. Der Roboter wiederum kann ein Feedback mittels der Aktuatoren bereitstellen, wobei dieses bereitgestellte Feedback wiederum auf der Sensorebene 12 angesiedelt ist.

Während das Trajektorienplanungsmodul 9 Teil der Planungsebene 13 ist und das Steuerungsmodul 8 Teil der Durchführungsebene 14 ist, ist die Koordinierungsanlage 3 Teil der beiden Ebenen 13 und 14. Strukturell liegt die Koordinierungsanlage 3 damit in der Planungsebene 13 und der Durchführungsebene 14.

Die Figuren 3a-3i zeigen schematisch den Ablauf zum Koordinieren der Handhabungseinrichtung 1 mittels der Koordinierungsanlage 2. Beispielhaft ist hierzu ein Zweiarmroboter verwendet. Der Ablauf ist hierbei in einem Koordinationsraum dargestellt. Die Abszisse des Koordinationsraums bildet die Zeitachse des rechten Arms t_{R} und die Ordinate bildet die Zeitachse des linken Arms t_{L}.

In Figur 3a steht der Roboter 2 still und führt keine Arbeitsbewegungen durch. Alle Zeitpunkte sind auf null gesetzt und/oder im Ursprung. Insbesondere werden als Zeitpunkte Zeitkoordinaten verstanden, beispielsweise die Zeitkoordinaten im Koordinationsraum.

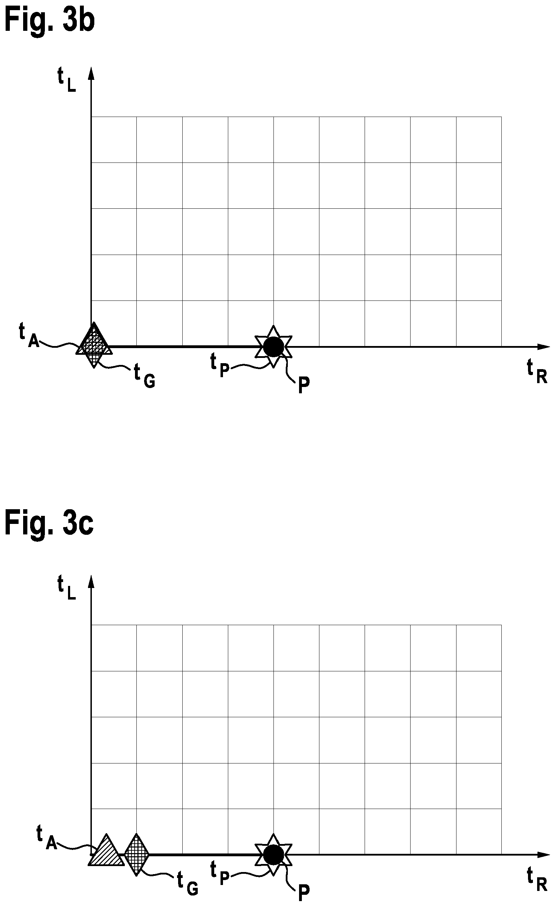

Figur 3b zeigt einen Zustand, bei dem für den rechten Arm ein Arbeitsbefehl vorliegt. Das Trajektorienplanungsmodul 9 bestimmt dazu eine Trajektorie, die kollisionsfrei im Arbeitsraum durchführbar ist. Zur Durchführung des Arbeitsbefehls und/oder der Arbeitsbewegung benötigt der Roboter eine gewisse Zeit, sodass ein maximaler Ausführungszeitpunkt festlegbar ist, der den Punkt P festlegt. Der Punkt P liegt dabei auf der Abszisse, da nur der eine Arm eine Arbeitsbewegung durchführt und für den linken Arm keine Arbeitszeit vergeht. Durch die Festlegung des Punktes P kann insbesondere das Trajektorienplanungsmodul 9 die kollisionsfreie Trajektorie bestimmen. Die Trajektoriendaten werden dann dem Steuerungsmodul 8 bereitgestellt.

In Figur 3c sind dem Roboter 2 bereits die Trajektoriendaten bereitgestellt und dieser beginnt mit der Durchführung der Arbeitsbewegung. Der aktuelle Zeitpunkt t_{A} verläuft bei dieser Arbeitsbewegung entlang der Abszisse. Ferner ist in Figur 3c ein Garantiezeitpunkt t_{G} gezeigt. Der Garantiezeitpunkt t_{G} liegt zeitlich in der Zukunft von dem aktuellen Zeitpunkt t_{A}. Der Garantiezeitpunkt t_{G} liegt ferner zwischen dem Punkt P, der die maximale Ausführungszeit beschreibt, und der aktuellen Zeit t_{A}.

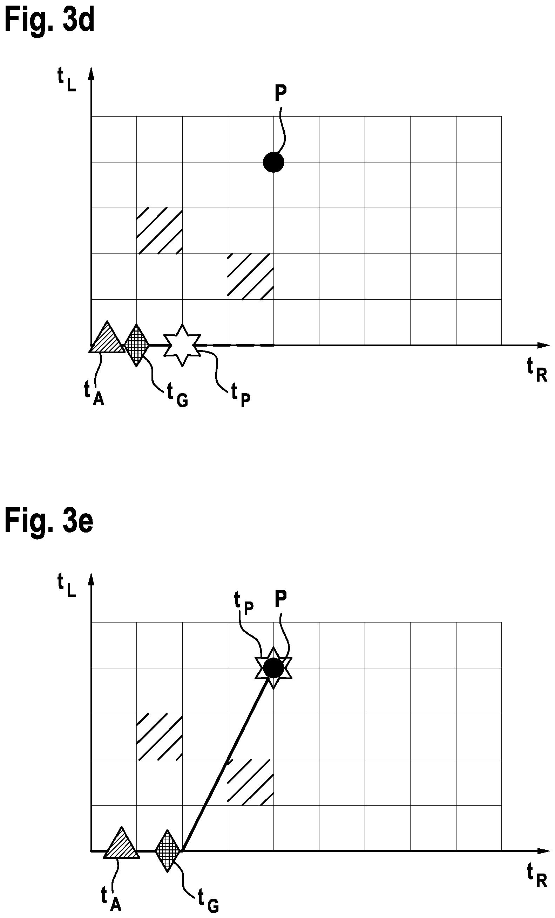

Figur 3d zeigt einen Zustand, bei dem ein weiterer Arbeitsbefehl vorliegt, wobei der weitere Arbeitsbefehl den linken Arm betrifft. Der Punkt P wird dabei in dem Koordinationsraum versetzt, wobei der Punkt P die maximale Ausführungsdauer für den rechten Arm und die maximale Ausführungsdauer für den linken Arm als Koordinaten trägt. Das Trajektorienplanungsmodul 9 ist dann ausgebildet, eine Trajektorie zu dem Punkt P zu bestimmen. Da der Roboter jedoch die erste Arbeitsbewegung bereits bis zu dem aktuellen Zeitpunkt ausgeführt hat, ist eine Planung vom Ursprung zum Punkt P nicht zielführend. Zur Berechnung einer neuen Trajektorie benötigt die Koordinierungsanlage 3 ein Planungszeitintervall. Das Planungszeitintervall wird ab dem Garantiezeitpunkt t_{G} hinzugerechnet, sodass ein Pufferzeitpunkt tp erhalten wird. Das Trajektorienplanungsmodul ist dann ausgebildet, die Trajektorie zwischen dem Pufferzeitpunkt tp und dem Punkt P zu bestimmen.

Figur 3e zeigt die neu geplante Trajektorie zwischen dem Pufferzeitpunkt tp und dem Punkt P. Bis zum Pufferzeitpunkt tp wird die Handhabungseinrichtung und/oder der Roboter weiterhin mit den alten Trajektoriendaten bestimmt, sodass der Bereich zwischen dem Ursprung und dem Pufferzeitpunkt tp zur Durchführung der ursprünglichen Trajektoriendaten gesichert ist.

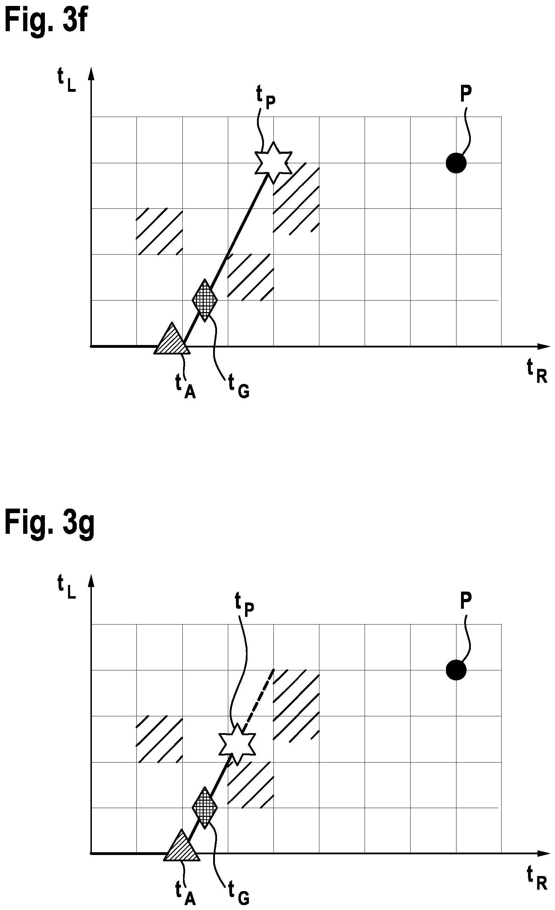

Figur 3f zeigt einen Zustand, bei dem ein weiterer Arbeitsbefehl vorliegt, wobei der nun weitere Arbeitsbefehl den rechten Arm betrifft. Dabei wird Punkt P im Koordinationsraum verschoben, wobei dieser neue Punkt P die neue Ausführungsdauer des rechten Arms berücksichtigt.

Figur 3g legt nun einen neuen Pufferzeitpunkt tp fest, wobei tp nun berücksichtigt, dass die Durchführung der Arbeitsbewegung weiter fortgeschritten ist und der aktuelle Zeitpunkt t_{A} verschoben ist. Zur Bestimmung des Pufferzeitpunkts tp wird das Garantiezeitintervall und das Planungszeitintervall zum aktuellen Zeitpunkt t_{A} hinzugerechnet.

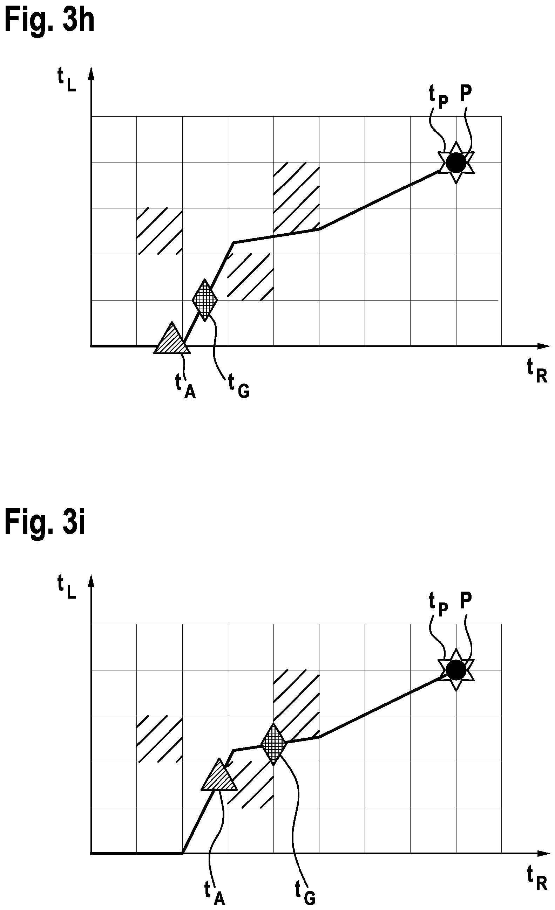

Figur 3h zeigt einen Plan einer der neu geplanten und/oder reparametrisierten Trajektorien zum Erreichen des Punkts P, der alle drei Arbeitsereignisse berücksichtigt. Damit die Trajektorien kollisionsfrei sind, ist die Verbindung zwischen dem Pufferzeitpunkt tp und dem Punkt P keine Gerade, sondern ein geknickter Weg. Dieser geknickte Weg im Koordinationsraum stellt die kollissionsfreien Trajektorien dar.

Figur 3i zeigt den Koordinationsraum zu einem späteren aktuellen Zeitpunkt t_{A} und wie sich der Garantiezeitpunkt t_{G} mit fortschreitendem aktuellen Zeitpunkt t_{A} verschiebt.

## Patentansprüche

1. Koordinierungsanlage (3) für eine Handhabungseinrichtung (1) mit einer Mehrzahl an kinematischen Ketten (4),
wobei jede der kinematischen Ketten (4) in einem Arbeitsraum (6) bewegbar ist, wobei mindestens zwei der Arbeitsräume einen Überlapp aufweisen, wobei die kinematischen Ketten (4) zur Durchführung einer auf einem Arbeitsbefehl basierenden Arbeitsbewegung ausgebildet sind,
mit einem Trajektorienplanungmodul (9) und einem Steuerungsmodul (8),
wobei das Steuerungsmodul (8) ausgebildet ist, die kinematischen Ketten (4) zur Durchführung der Arbeitsbewegung basierend auf Trajektoriendaten anzusteuern,
wobei das Trajektorienplanungsmodul (9) ausgebildet ist, die Trajektoriendaten zur Durchführung der Arbeitsbewegung zu bestimmen und die Trajektoriendaten dem Steuerungsmodul (8) bereitzustellen,
wobei das Trajektorienplanungsmodul (9) ausgebildet ist, bei Vorliegen eines weiteren Arbeitsbefehls während der Durchführung der Arbeitsbewegung die Trajektoriendaten in umgeplante Trajektoriendaten umzuplanen und dem Steuerungsmodul (8) bereitzustellen
**dadurch gekennzeichnet, dass**
das Trajektorienplanungsmodul (9) ausgebildet ist, als vorläufige Trajektoriendaten für jede der kinematischen Ketten (4) eine Minimalzeittrajektorie zu bestimmen, wobei die Koordinierungsanlage (3) ein Koordinierungsmodul aufweist, wobei das Koordinierungsmodul ausgebildet ist, die auf der Minimalzeittrajektorie basierenden vorläufigen Trajektoriendaten in die Trajektoriendaten zu reparametrisieren, sodass Arbeitsbewegungen kollisionsfrei ausführbar sind und Teile der Trajektorie beschleunigt oder verlangsamt ausgeführt werden.

2. Koordinierungsanlage (1) nach Anspruch 1, **dadurch gekennzeichnet, dass** das Trajektorienplanungsmodul (9) ausgebildet ist, die Trajektoriendaten erst ab einem Pufferzeitpunkt (tp) in die umgeplanten Trajektoriendaten umzuplanen, wobei der Pufferzeitpunkt (tp) um ein Pufferzeitintervall nach einem Ereigniszeitpunkt liegt, wobei der Ereigniszeitpunkt ein Zeitpunkt ist, an dem der weitere Arbeitsbefehl vorliegt.

3. Koordinierungsanlage (3) nach Anspruch 2, **dadurch gekennzeichnet, dass** das Steuerungsmodul (8) ausgebildet ist, mindestens bis zu einem Garantiezeitpunkt (t_{G}) die kinematischen Ketten (4) zur Durchführung der Arbeitsbewegung basierend auf den ursprünglichen Trajektoriendaten anzusteuern, wobei der Garantiezeitpunkt (t_{G}) ein um ein Garantieintervall nach dem Ereigniszeitpunkt liegender Zeitpunkt ist.

4. Koordinierungsanlage (3) nach Anspruch 3, **dadurch gekennzeichnet, dass** der Garantiezeitpunkt (t_{G}) gleich dem Pufferzeitpunkt (tp) ist.

5. Koordinierungsanlage (3) nach einem der vorherigen Ansprüche, **dadurch gekennzeichnet, dass** das Trajektorienplanungsmodul (9) ausgebildet ist, die Minimalzeitrajektorie basierend auf einer endlichen Maximalbeschleunigung und/oder einer endlichen Maximalgeschwindigkeit zu bestimmen.

6. Koordinierungsanlage (3) nach einem der vorherigen Ansprüche, **gekennzeichnet durch** ein Ausblendemodul, wobei das Ausblendemodul ausgebildet ist, für das Steuerungsmodul (8) Trajektoriendaten auszublenden, die in der Umplanung sind und/oder einen späteren Zeitpunkt aufweisen als ein Maximal-Vorauslese Zeitpunkt.

7. Koordinierungsanlage (3) nach einem der vorherigen Ansprüche, **gekennzeichnet durch** ein Schätzmodul, wobei das Schätzmodul ausgebildet ist, ein Planungszeitintervall zu schätzen, wobei das Planungszeitintervall die Zeitdauer zur Planung, Reparametrisierung und/oder Umplanung der Trajektoriendaten ist.

8. Koordinierungsanlage (3) nach Anspruch 7, **dadurch gekennzeichnet, dass** der Pufferzeitpunkt (t_{P}) dem Ereigniszeitpunkt plus dem Planungszeitintervall entspricht und/oder der Maximal-Vorauslese-Zeitpunkt dem Ereigniszeitpunkt plus dem Planungszeitintervall entspricht.

9. Koordinierungsanlage (3) nach einem der vorherigen Ansprüche, **dadurch gekennzeichnet, dass** der Pufferzeitpunkt (t_{P}) dem Ereigniszeitpunkt plus dem Garantieintervall plus dem Planungszeitintervall entspricht.

10. Koordinierungsanlage (3) nach einem der vorherigen Ansprüche, **dadurch gekennzeichnet, dass** der der Pufferzeitpunkt (t_{P}) kleiner oder gleich dem Maximal-Vorauslese-Zeitpunkt ist.

11. Koordinierungsanlage (3) nach einem der vorherigen Ansprüche, **dadurch gekennzeichnet, dass** die kinematischen Ketten (4) jeweils als ein Roboterarm ausgebildet ist.

12. Handhabungseinrichtung (1) **gekennzeichnet durch** eine Koordinierungsanlage (3) nach einem der vorherigen Ansprüche.

13. Verfahren zum Koordinieren einer Handhabungseinrichtung (1) mit einer Koordinierungsanlage (3) nach einem der Ansprüche 1 bis 11, wobei Trajektoriendaten zur Durchführung einer Arbeitsbewegung bestimmt werden, wobei die Arbeitsbewegung auf einem Arbeitsbefehl basiert, wobei bei Vorliegen und/oder Eintreten eines weiteren Arbeitsbefehls, die Handhabungseinrichtung (1) weiterhin mit den bereits bestehenden Trajektoriendaten angesteuert wird, wobei parallel und/oder gleichzeitig zur Ansteuerung mit den ursprünglichen Trajektoriendaten umgeplante Trajektoriendaten bestimmt werden. **dadurch gekennzeichnet, dass** das Verfahren ausgebildet ist, als vorläufige Trajektoriendaten für jede der kinematischen Ketten (4) eine Minimalzeittrajektorie zu bestimmen, und das Verfahren weiter ausgebildet ist, die auf der Minimalzeittrajektorie basierenden vorläufigen Trajektoriendaten in die Trajektoriendaten zu reparametrisieren, sodass Arbeitsbewegungen kollisionsfrei ausführbar sind und Teile der Trajektorie beschleunigt Oder verlangsamt ausgeführt werden.

14. Computerprogramm, welches eingerichtet ist, alle Schritte des Verfahrens nach Anspruch 13 auszuführen.

15. Maschinenlesbares, insbesondere nichtflüchtiges maschinenlesbares, Speichermedium, auf dem das Computerprogramm nach Anspruch 14 gespeichert ist.

## Claims

1. Coordination system (3) for a handling device (1) having a plurality of kinematic chains (4),
wherein each of the kinematic chains (4) can be moved in a working space, wherein at least two of the working spaces have an overlap, wherein the kinematic chains (4) are designed to perform a work movement based on a work command,
having a trajectory planning module (9) and a control module (8),
wherein the control module (8) is designed to control the kinematic chains (4) to perform the work movement based on trajectory data,
wherein the trajectory planning module (9) is designed to determine the trajectory data for performing the work movement and to make the trajectory data available to the control module (8),
wherein the trajectory planning module (9) is designed, if there is a further work command while performing the work movement, to replan the trajectory data into replanned trajectory data and to make them available to the control module (8),
**characterized in that**
the trajectory planning module (9) is designed to determine a minimum time trajectory as preliminary trajectory data for each of the kinematic chains (4), wherein the coordination system (3) has a coordination module, wherein the coordination module is designed to reparameterize the preliminary trajectory data based on the minimum time trajectory into the trajectory data, with the result that work movements can be carried out without collisions and parts of the trajectory are carried out in an accelerated or decelerated manner.

2. Coordination system (1) according to Claim 1, **characterized in that** the trajectory planning module (9) is designed to replan the trajectory data into the replanned trajectory data only after a buffer time (tp), wherein the buffer time (t_{P}) is a buffer time interval after an event time, wherein the event time is a time at which the further work command is present.

3. Coordination system (3) according to Claim 2, **characterized in that** the control module (8) is designed to control the kinematic chains (4) to perform the work movement based on the original trajectory data at least until a guarantee time (t_{G}), wherein the guarantee time (t_{G}) is a time that is a guarantee interval after the event time.

4. Coordination system (3) according to Claim 3, **characterized in that** the guarantee time (t_{G}) is the same as the buffer time (t_{P}).

5. Coordination system (3) according to one of the preceding claims, **characterized in that** the trajectory planning module (9) is designed to determine the minimum time trajectory based on a finite maximum acceleration and/or a finite maximum speed.

6. Coordination system (3) according to one of the preceding claims, **characterized by** a masking module, wherein the masking module is designed to mask trajectory data for the control module (8) which are being replanned and/or have a later time than a maximum pre-reading time.

7. Coordination system (3) according to one of the preceding claims, **characterized by** an estimation module, wherein the estimation module is designed to estimate a planning time interval, wherein the planning time interval is the period for planning, reparameterizing and/or replanning the trajectory data.

8. Coordination system (3) according to Claim 7, **characterized in that** the buffer time (tp) corresponds to the event time plus the planning time interval, and/or the maximum pre-reading time corresponds to the event time plus the planning time interval.

9. Coordination system (3) according to one of the preceding claims, **characterized in that** the buffer time (tp) corresponds to the event time plus the guarantee interval plus the planning time interval.

10. Coordination system (3) according to one of the preceding claims, **characterized in that** the buffer time (tp) is less than or equal to the maximum pre-reading time.

11. Coordination system (3) according to one of the preceding claims, **characterized in that** the kinematic chains (4) are each in the form of a robot arm.

12. Handling device (1), **characterized by** a coordination system (3) according to one of the preceding claims.

13. Method for coordinating a handling device (1) having a coordination system (3) according to one of Claims 1 to 11, wherein trajectory data for performing a work movement are determined, wherein the work movement is based on a work command, wherein, if a further work command is present and/or occurs, the handling device (1) is still controlled using the already existing trajectory data, wherein replanned trajectory data are determined in parallel with and/or at the same time as the control with the original trajectory data, **characterized in that** the method is designed to determine a minimum time trajectory for each of the kinematic chains (4) as preliminary trajectory data, and the method is also designed to reparameterize the preliminary trajectory data based on the minimum time trajectory into the trajectory data, with the result that work movements can be carried out without collisions and parts of the trajectory are carried out in an accelerated or decelerated manner.

14. Computer program which is configured to carry out all steps of the method according to Claim 13.

15. Machine-readable, in particular non-volatile machine-readable, storage medium on which the computer program according to Claim 14 is stored.

## Revendications

1. Installation de coordination (3) pour un dispositif de manutention (1) comprenant une pluralité de chaînes cinématiques (4),
chacune des chaînes cinématiques (4) pouvant se déplacer dans un espace de travail (6), au moins deux des espaces de travail présentant un chevauchement, les chaînes cinématiques (4) étant configurées pour accomplir un mouvement de travail basé sur une instruction de travail, comprenant un module de planification de trajectoire (9) et un module de commande (8),
le module de commande (8) étant configuré pour commander les chaînes cinématiques (4) en vue d'accomplir le mouvement de travail en se basant sur des données de trajectoire,
le module de planification de trajectoire (9) étant configuré pour déterminer les données de trajectoire en vue d'accomplir le mouvement de travail et fournir les données de trajectoire au module de commande (8),
le module de planification de trajectoire (9) étant configuré pour, en présence d'une instruction de travail supplémentaire pendant l'accomplissement du mouvement de travail, replanifier les données de trajectoire en données de trajectoire replanifiées et les fournir au module de commande (8)
**caractérisée en ce que**
le module de planification de trajectoire (9) est configuré pour déterminer une trajectoire à temps minimal en tant que données de trajectoire provisoires pour chacune des chaînes cinématiques (4), l'installation de coordination (3) possédant un module de coordination, le module de coordination étant configuré pour reparamétrer les données de trajectoire provisoires basées sur la trajectoire à temps minimal en les données de trajectoire, de sorte que les mouvements de travail peuvent être exécutés sans collision et des parties de la trajectoire sont exécutées de manière accélérée ou ralentie.

2. Installation de coordination (1) selon la revendication 1, **caractérisée en ce que** le module de planification de trajectoire (9) est configuré pour ne replanifier les données de trajectoire en les données de trajectoire replanifiées seulement à partir d'un instant de tampon (tp), l'instant de tampon (tp) se trouvant à un intervalle de temps de tampon après un instant d'événement, l'instant d'événement étant un instant auquel l'instruction de travail supplémentaire est présente.

3. Installation de coordination (3) selon la revendication 2, **caractérisée en ce que** le module de commande (8) est configuré pour commander les chaînes cinématiques (4) en vue d'accomplir le mouvement de travail en se basant sur les données de trajectoire originelles au moins jusqu'à un instant de garantie (t_{G}), l'instant de garantie (t_{G}) étant un instant qui se trouve à un intervalle de garantie après l'instant d'événement.

4. Installation de coordination (3) selon la revendication 3, **caractérisée en ce que** l'instant de garantie (t_{G}) est égal à l'instant de tampon (t_{P}).

5. Installation de coordination (3) selon l'une des revendications précédentes, **caractérisée en ce que** le module de planification de trajectoire (9) est configuré pour déterminer la trajectoire à temps minimal en se basant sur une accélération maximale finie et/ou une vitesse maximale finie.

6. Installation de coordination (3) selon l'une des revendications précédentes, **caractérisée par** un module de masquage, le module de masquage étant configuré pour masquer au module de commande (8) les données de trajectoire qui sont en replanification et/ou qui présentent un instant ultérieur à un instant de pré-extraction maximal.

7. Installation de coordination (3) selon l'une des revendications précédentes, **caractérisée par** un module d'estimation, le module d'estimation étant configuré pour estimer un intervalle de temps de planification, l'intervalle de temps de planification étant la durée nécessaire pour la planification, le reparamétrage et/ou la replanification des données de trajectoire.

8. Installation de coordination (3) selon la revendication 7, **caractérisée en ce que** l'instant de tampon (tp) correspond à l'instant d'événement plus l'intervalle de temps de planification et/ou l'instant de pré-extraction maximal correspond à l'instant d'événement plus l'intervalle de temps de planification.

9. Installation de coordination (3) selon l'une des revendications précédentes, **caractérisée en ce que** l'instant de tampon (t_{P}) correspond à l'instant d'événement plus l'intervalle de garantie plus l'intervalle de temps de planification.

10. Installation de coordination (3) selon l'une des revendications précédentes, **caractérisée en ce que** l'instant de tampon (tp) est inférieur ou égal à l'instant de pré-extraction maximal.

11. Installation de coordination (3) selon l'une des revendications précédentes, **caractérisée en ce que** les chaînes cinématiques (4) sont respectivement réalisées sous la forme d'un bras de robot.

12. Dispositif de manutention (1), **caractérisé par** une installation de coordination (3) selon l'une des revendications précédentes.

13. Procédé pour coordonner un dispositif de manutention (1) avec une installation de coordination (3) selon l'une des revendications 1 à 11, des données de trajectoire destinées à accomplir un mouvement de travail étant déterminées, le mouvement de travail se basant sur une instruction de travail, le dispositif de manutention (1) continuant d'être commandé avec les données de trajectoire déjà présentes en présence et/ou en cas de survenance d'une instruction de travail supplémentaire, des données de trajectoire replanifiées étant déterminées parallèlement et/ou simultanément à la commande avec les données de trajectoire originelles, **caractérisé en ce que** le procédé est configuré pour déterminer une trajectoire à temps minimal en tant en tant que données de trajectoire provisoires pour chacune des chaînes cinématiques (4), et le procédé est en outre configuré pour reparamétrer les données de trajectoire provisoires basées sur la trajectoire à temps minimal en les données de trajectoire, de sorte que les mouvements de travail puissent être exécutés sans collision et des parties de la trajectoire sont exécutées de manière accélérée ou ralentie.

14. Programme informatique, lequel est conçu pour exécuter toutes les étapes du procédé selon la revendication 13.

15. Support d'enregistrement lisible par machine, notamment non volatile lisible par machine, sur lequel est enregistré le programme informatique selon la revendication 14.
